# EUROPEAN PATENT APPLICATION

(11) **EP 4 276 419 A1**
(43) Date of publication of application: **15.11.2023**
(21) Application number: 21933135.2
(22) Date of filing: 26.03.2021
(51) Int. Cl.: G01D 5/353

(54) **PORTABLE DEVICE, OPTICAL FIBER SENSING SYSTEM, AND ANALYSIS METHOD**

(71) Applicant: NEC Corporation, 108-8001 Tokyo (JP)
(72) Inventor: YODA Yukihide, Tokyo 108-8001 (JP); OGURA Naoto, Tokyo 108-8001 (JP); IWANO Tadayuki, Tokyo 108-8001 (JP)
(74) Representative: Vossius & Partner Patentanwälte Rechtsanwälte mbB
(86) International application number: PCT/JP2021/013047
(87) International publication number: WO 2022/201532

(57) **Abstract**

Provided is a portable device which make it possible to facilitate analysis, in cooperation with an external system, on data obtained by optical fiber sensing. A portable device (2) comprises: a sensing means (11) for executing optical fiber sensing using an optical fiber cable (1); an analysis means (12) for executing primary analysis processing on sensing data obtained by the optical fiber sensing; a communication means (13) for transmitting data containing the results of the primary analysis processing to an external analysis means (3) for executing, outside the portable device (2), secondary analysis processing based on the results of the primary analysis processing; and a housing (15) which accommodates the sensing means (11), the analysis means (12), and the communication means (13).

## Description

### Technical Field

The present invention relates to a portable device and the like.

### Background Art

A technique for measuring vibration, sound, temperature, or the like by optical fiber sensing is known. For example, PTL 1 discloses an optical fiber distributed temperature measurement device measuring a temperature distribution by optical fiber sensing (see paragraphs [0002] to [0005], [0030], and [0031], Figs. 2 and 4, and the like in PTL 1).

The optical fiber distributed temperature measurement device described in PTL 1 includes an electrical signal control processing block, an optical system block, a reference optical fiber block, and a power supply block (see paragraphs [0030] and [0031], Fig. 2, and the like in PTL 1). The individual blocks are housed in housing cases. The optical fiber distributed temperature measurement device is constituted of the housing cases being connected to one another (see abstract, Fig. 1, and the like in PTL 1).

### Citation List

### Patent Literature

PTL 1: Japanese Unexamined Patent Application Publication No. 2013-080824

### Summary of Invention

### Technical Problem

The optical fiber distributed temperature measurement device described in PTL 1 includes an electrical signal control processing block, but does not include a block for communicating with an external system. Thus, there is a problem of difficulty in achieving an analysis in cooperation with an external system, when analyzing data acquired by optical fiber sensing. Specifically, for example, there is a problem of difficulty in analyzing by using a dedicated artificial intelligence (AI) engine in an external system. Further, for example, there is a problem of difficulty in complexly analyzing data acquired by a plurality of optical fiber distributed temperature measurement devices in an external system.

In view of the above-described problems, an object of the present invention is to provide a portable device and the like that are able to easily achieve an analysis in cooperation with an external system on data acquired by optical fiber sensing.

### Solution to Problem

A portable device according to the present invention includes: a sensing means for executing optical fiber sensing using an optical fiber cable; an analysis means for executing primary analysis processing on sensing data acquired by the optical fiber sensing; a communication means for transmitting, to an external analysis means for executing secondary analysis processing based on a result of the primary analysis processing outside the portable device, data including a result of the primary analysis processing; and a housing accommodating the sensing means, the analysis means, and the communication means.

An analysis method according to the present invention includes, by a portable device: executing optical fiber sensing using an optical fiber cable; executing primary analysis processing on sensing data acquired by the optical fiber sensing; and transmitting, to an external analysis means for executing secondary analysis processing based on a result of the primary analysis processing outside the portable device, data including a result of the primary analysis processing.

### Advantageous Effects of Invention

The present invention is able to easily achieve an analysis in cooperation with an external system on data acquired by optical fiber sensing.

### Brief Description of Drawings

[Fig. 1] Fig. 1 is a block diagram illustrating a main portion of an optical fiber sensing system according to a first example embodiment.
[Fig. 2] Fig. 2 is a block diagram illustrating a main portion of a portable device and an analysis system according to the first example embodiment.
[Fig. 3] Fig. 3 is an explanatory diagram illustrating a hardware configuration of a main portion of the portable device according to the first example embodiment.
[Fig. 4] Fig. 4 is a flowchart illustrating an operation of the portable device according to the first example embodiment.
[Fig. 5] Fig. 5 is a block diagram illustrating a main portion of an optical fiber sensing system for comparison.
[Fig. 6] Fig. 6 is a block diagram illustrating a main portion of another portable device according to the first example embodiment.
[Fig. 7] Fig. 7 is a block diagram illustrating a main portion of another optical fiber sensing system according to the first example embodiment.
[Fig. 8] Fig. 8 is a block diagram illustrating a main portion of another portable device according to the first example embodiment.
[Fig. 9] Fig. 9 is a block diagram illustrating a main portion of an optical fiber sensing system according to a second example embodiment.

### Example Embodiment

Hereinafter, example embodiments of the present invention will be descried in detail with reference to the accompanying drawings.

### [First Example Embodiment]

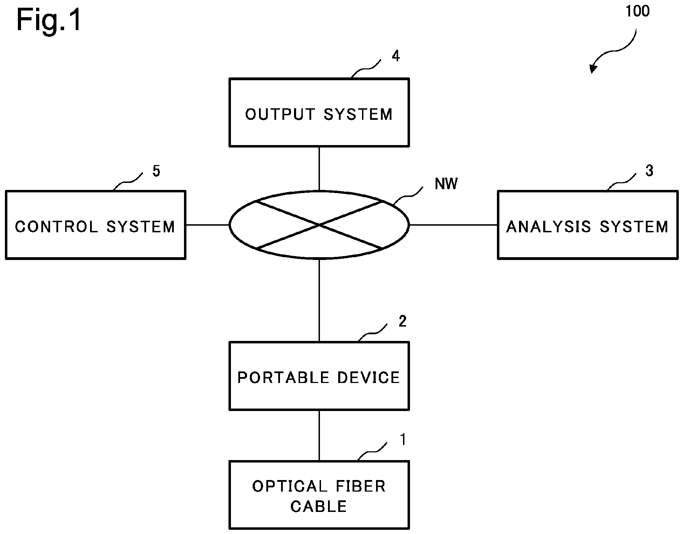

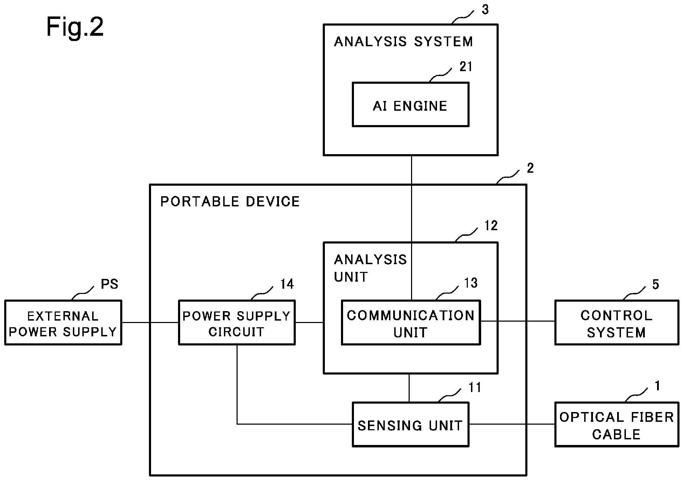

Fig. 1 is a block diagram illustrating a main portion of an optical fiber sensing system according to a first example embodiment. Fig. 2 is a block diagram illustrating a main portion of a portable device and an analysis system according to the first example embodiment. The optical fiber sensing system according to the first example embodiment will be described with reference to Figs. 1 and 2.

As illustrated in Fig. 1, an optical fiber sensing system 100 includes an optical fiber cable 1, a portable device 2, an analysis system 3, an output system 4, and a control system 5. The portable device 2 can freely communicate with the analysis system 3 via a network NW. Further, the analysis system 3 can freely communicate with the output system 4 via the network NW. Further, the control system 5 can freely communicate with each of the portable device 2, the analysis system 3, and the output system 4 via the network NW.

As illustrated in Fig. 2, the portable device 2 includes a sensing unit 11, an analysis unit 12, and a communication unit 13. The communication unit 13 is provided in the analysis unit 12. Further, the portable device 2 includes a power supply circuit 14. Further, the analysis system 3 includes an AI engine 21.

The optical fiber cable 1 can be used in optical fiber sensing. Specifically, for example, the optical fiber cable 1 can be used in detection of vibration, sound, or temperature by distributed optical fiber sensing (distributed fiber optic sensing, DFOS). Hereinafter, data acquired by executing optical fiber sensing using the optical fiber cable 1 may be collectively referred to as "sensing data".

In the portable device 2, the sensing unit 11 acquires sensing data by executing optical fiber sensing (more specifically, DFOS) using the optical fiber cable 1. The sensing unit 11 is configured by, for example, a distributed vibration sensing (DVS) device or a distributed acoustic sensing (DAS) device. In this case, the sensing data acquired by the sensing unit 11 are a distribution in a longitudinal direction of the optical fiber cable 1, and include a distribution of vibration intensity or sound intensity for each frequency component. Alternatively, for example, the sensing unit 11 is configured by a distributed temperature sensing (DTS) device. In this case, the sensing data acquired by the sensing unit 11 are a distribution in a longitudinal direction of the optical fiber cable 1, and include a distribution of a relative value (for example, a ratio of intensity of Raman scattered light) associated with temperature.

In the portable device 2, the analysis unit 12 executes predetermined analysis processing (hereinafter, will be referred to as "primary analysis processing") on sensing data acquired by the sensing unit 11. The primary analysis processing includes, for example, processing (so-called "lat-long") of determining a position coordinate associated with the acquired sensing data. Alternatively, for example, the primary analysis processing includes processing of detecting, using the acquired sensing data, occurrence of an abnormality (occurrence of abnormal vibration, occurrence of abnormal sound, occurrence of abnormal temperature change, or the like) around the optical fiber cable 1. Alternatively, for example, the primary analysis processing includes both the pieces of processing. Various kinds of known techniques can be used in the pieces of processing. Detailed description of the techniques will be omitted.

In the portable device 2, the communication unit 13 of the analysis unit 12 can freely communicate with the analysis system 3. The communication unit 13 transmits, to the analysis system 3, data (hereinafter, may be referred to as "primary analysis data") including a result of primary analysis processing executed by the analysis unit 12. The analysis unit 12 is configured by, for example, a serve device. The server device uses, for example, an on-vehicle computer or a rack mount server. Further, the communication unit 13 is configured by, for example, at least one of a wireless communication module and a wired communication module provided in the server device. The wireless communication module uses, for example, a 3rd generation (3G) module, a long term evolution (LTE) module, a 5th generation (5G) module, or a wireless local area network (LAN) module. On the other hand, the wired communication module uses, for example, a wired LAN module. That is, the communication unit 13 uses, for example, at least one of a cellular module and a LAN module.

In the portable device 2, the power supply circuit 14 supplies electrical power for operation to each of the sensing unit 11 and the analysis unit 12 (including the communication unit 13), by using electrical power supplied from an external power supply PS. That is, the sensing unit 11 executes optical fiber sensing as described above, by using electrical power supplied from the power supply circuit 14. Further, the analysis unit 12 executes primary analysis processing as described above, by using electrical power supplied from the power supply circuit 14. Further, the communication unit 13 of the analysis unit 12 transmits primary analysis data to the analysis system 3 as described above, by using electrical power supplied from the power supply circuit 14. The external power supply PS is configured by, for example, an AC power supply for home use or for commercial use. The power supply circuit 14 is configured by, for example, a power supply module including an AC-DC converter and a DC-DC converter for transformation (more specifically, for step-down).

The analysis system 3 receives primary analysis data transmitted from the portable device 2. The analysis system 3 executes another predetermined analysis processing (hereinafter, will be referred to as "secondary analysis processing") on the received primary analysis data. That is, the secondary analysis processing is processing based on a result of primary analysis processing in the portable device 2. In other words, the primary analysis processing in the portable device 2 is processing equivalent to preprocessing on the secondary analysis processing in the analysis system 3. The analysis system 3 is configured by, for example, a cloud server.

The secondary analysis processing includes, for example, processing of generating data (hereinafter, will be referred to as "value-added data") having improved value compared with the above received primary analysis data, by processing the primary analysis data. Herein, the "value" is, for example, value for a customer of a service provided by using the optical fiber sensing system 100. The secondary analysis processing may use the dedicated AI engine 21. The AI engine 21 uses, for example, a learned model generated by machine learning. The analysis system 3 inputs the above received primary analysis data to the AI engine 21. The AI engine 21 outputs value-added data in response to the input, based on a result of machine learning. In this way, value-added data are generated.

The analysis system 3 transmits the generated value-added data to the output system 4. The output system 4 receives the transmitted value-added data. The output system 4 outputs the received value-added data. Thereby, value-added data are provided to the above customer. Alternatively, value-added data are output to another system (not illustrated). The output system 4 is configured by, for example, another cloud server.

Herein, the output system 4 may output value-added data by displaying, using a graphical user interface (GUI), an image associated with value-added data. Alternatively, the output system 4 may output, using an application programming interface (API), value-added data as data of a predetermined format.

As described above, in the portable device 2, the communication unit 13 can freely communicate with the analysis system 3. In addition thereto, the communication unit 13 can freely communicate with the control system 5. The control system 5 controls an operation of each of the sensing unit 11 and the analysis unit 12, by communicating with the communication unit 13. That is, the sensing unit 11 executes optical fiber sensing as described above, under control of the control system 5. Further, the analysis unit 12 executes primary analysis processing as described above, under control of the control system 5. Further, the communication unit 13 of the analysis unit 12 transmits primary analysis data to the analysis system 3 as described above, under control of the control system 5. The control system 5 is configured by, for example, another cloud server.

Specifically, for example, the control system 5 transmits, to the portable device 2, a signal (hereinafter, will be referred to as a "first control signal") for controlling an operation of the sensing unit 11 and a signal (hereinafter, will be referred to as a "second control signal") for controlling an operation of the analysis unit 12. The communication unit 13 receives the transmitted first control signal and the second control signal. The communication unit 13 outputs the received first control signal and the second control signal to the analysis unit 12. The analysis unit 12 executes primary analysis processing, based on the output second control signal, and outputs the output first control signal to the sensing unit 11. The sensing unit 11 executes optical fiber sensing, based on the output first control signal.

Further, the control system 5 may control an operation of the analysis system 3, by communicating with the analysis system 3. That is, the analysis system 3 may execute secondary analysis processing as described above, under control of the control system 5. Further, the analysis system 3 may transmit value-added data to the output system 4 as described above, under control of the control system 5.

Further, the control system 5 may output an operation of the output system 4, by communicating with the output system 4. That is, the output system 4 may output value-added data as described above, under control of the control system 5.

As above, the control system 5 may control an overall operation of the optical fiber sensing system 100.

In this way, a main portion of the optical fiber sensing system 100 is configured.

Hereinafter, the sensing unit 11 may be referred to as a "sensing means". The analysis unit 12 may be referred to as an "analysis means". The communication unit 13 may be referred to as a "communication means". The analysis system 3 may be referred to as an "external analysis means". The control system 5 may be referred to as an "external control means".

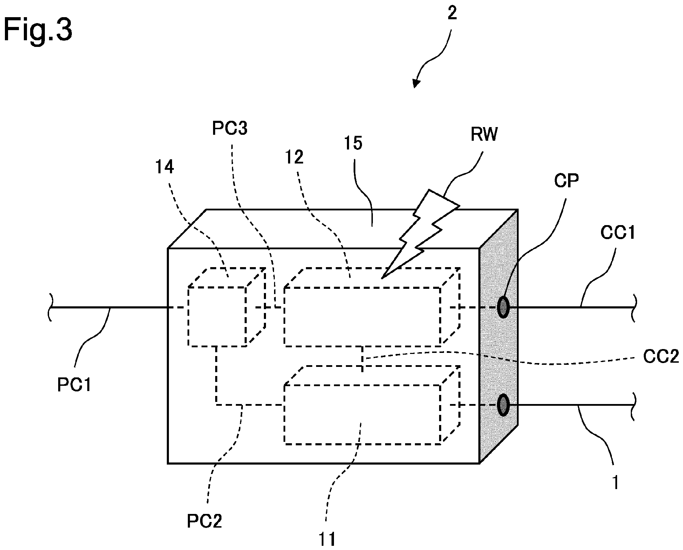

Next, a hardware configuration of a main portion of the portable device 2 will be described with reference to Fig. 3.

As described above, the sensing unit 11 is configured by, for example, a DVS device, a DAS device, or a DTS device. The analysis unit 12 is configured by, for example, a server device. The communication unit 13 is configured by, for example, a communication module provided in a server device. The power supply circuit 14 is configured by, for example, a power supply module.

Herein, a DVS device, a DAS device, or a DTS device, a server device (including a communication module), and a power supply module are accommodated in one substantially box-shaped housing 15. In other words, the portable device 2 includes the housing 15 accommodating the sensing unit 11, the analysis unit 12 (including the communication unit 13), and the power supply circuit 14, as illustrated in Fig. 3. The sensing unit 11, the analysis unit 12, and the power supply circuit 14 are fixed, inside the housing 15, to the housing 15 by using a not-illustrated screw or the like. The housing 15 may include a not-illustrated handle. Thereby, the portable device 2 can be easily carried by a human hand.

In an example illustrated in Fig. 3, the communication unit 13 (not illustrated in Fig. 3) of the analysis unit 12 uses both of a wireless communication module and a wired communication module. Thus, the communication unit 13 can freely communicate with an external system by using a radio wave RW, and can freely communicate with an external system by using a wired communication cable CC1 connected to a wired communication port CP. The radio wave RW is, for example, a radio wave for 3G communication, LTE communication, 5G communication, or wireless LAN communication. The wired communication port CP is, for example, a wired LAN port. The wired communication cable CC1 is, for example, a LAN cable.

Specifically, for example, the communication unit 13 communicates with the analysis system 3 by using the radio wave RW, and communicates with the control system 5 by using the wired communication cable CC1 connected to the wired communication port CP. That is, the wired communication port CP may be a wired communication port for control. Further, the wired communication cable CC1 may be a wired communication cable for control.

Further, inside the housing 15, the sensing unit 11 and the analysis unit 12 are connected to each other by another wired communication cable CC2. In other words, inside the housing 15, the sensing unit 11 and the analysis unit 12 can freely communicate with each other. Thereby, as described above, the sensing unit 11 can output sensing data to the analysis unit 12. Further, as described above, the analysis unit 12 can output a first control signal to the sensing unit 11.

Further, as described above, the power supply circuit 14 supplies electrical power for operation to each of the sensing unit 11 and the analysis unit 12, by using electrical power supplied from the external power supply PS (not illustrated in Fig. 3). Thus, the power supply circuit 14 is electrically connected to the external power supply PS by an AC power supply cable PC1. Further, inside the housing 15, the sensing unit 11 is electrically connected to the power supply circuit 14 by a DC power supply cable PC2. Furthermore, inside the housing 15, the analysis unit 12 is electrically connected to the power supply circuit 14 by another DC power supply cable PC3.

Herein, supposing that a power supply circuit for the sensing unit 11 and a power supply circuit for the analysis unit 12 are provided separately from each other inside the housing 15, it is required that two AC power supply cables be connected to the portable device 2. In contrast, the number of AC power supply cables PC1 to be connected to the portable device 2 can be reduced to one, by providing the power supply circuit 14 shared by the sensing unit 11 and the analysis unit 12. This can facilitate handling of the portable device 2.

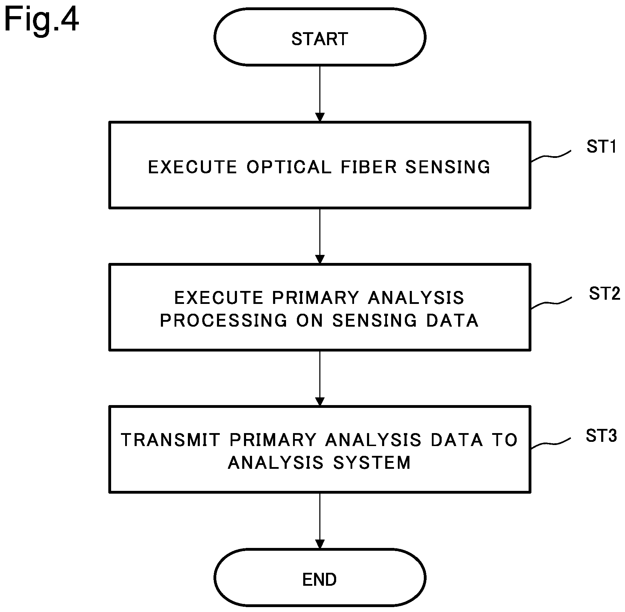

Next, an operation of the portable device 2, mainly an operation of the sensing unit 11, the analysis unit 12, and the communication unit 13, will be described with reference to a flowchart illustrated in Fig. 4.

First, the sensing unit 11 executes optical fiber sensing (more specifically, DFOS) using the optical fiber cable 1 (Step ST1). Thereby, sensing data are acquired. Then, the analysis unit 12 executes primary analysis processing on the sensing data acquired in Step ST1 (Step ST2). A specific example of the primary analysis processing is as described already. Thus, repeated description will be omitted. Then, the communication unit 13 of the analysis unit 12 transmits, to the analysis system 3, data (that is, primary analysis data) including a result of the primary analysis processing in Step ST2 (Step ST3).

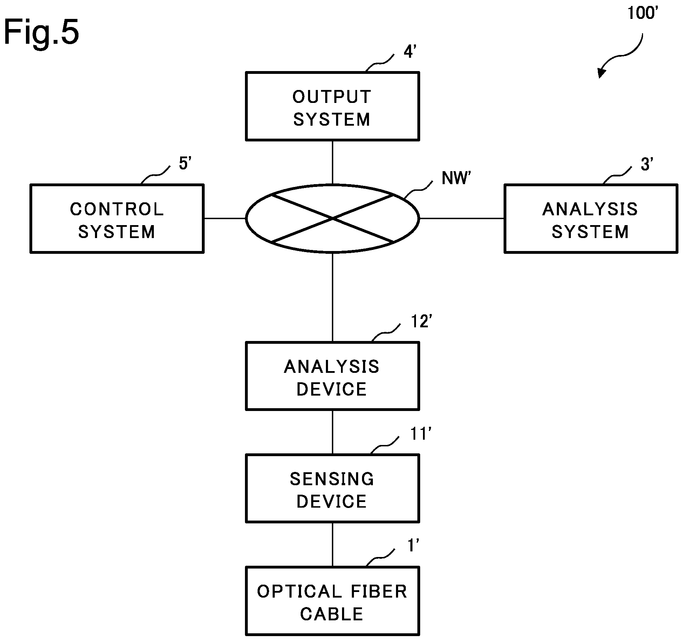

Next, an optical fiber sensing system 100' for comparison with the optical fiber sensing system 100 will be described with reference to Fig. 5.

As illustrated in Fig. 5, the optical fiber sensing system 100' includes an optical fiber cable 1', an analysis system 3', an output system 4', and a control system 5'. The optical fiber cable 1', the analysis system 3', the output system 4', and the control system 5' are similar to the optical fiber cable 1, the analysis system 3, the output system 4, and the control system 5, in the optical fiber sensing system 100.

Herein, the optical fiber sensing system 100' includes a sensing device 11' and an analysis device 12', instead of the portable device 2 in the optical fiber sensing system 100. The analysis device 12' can freely communicate with the analysis system 3' via a network NW'.

The sensing device 11' includes a function similar to a function included in the sensing unit 11 of the portable device 2 in the optical fiber sensing system 100. That is, the sensing device 11' is configured by, for example, a DVS device, a DAS device, or a DTS device.

The analysis device 12' includes a function similar to a function included in the analysis unit 12 (including the communication unit 13) of the portable device 2 in the optical fiber sensing system 100. That is, the analysis device 12' is configured by, for example, a server device. The server device is equivalent to an edge computer for a cloud network including the analysis system 3', the output system 4', and the control system 5'.

Next, an effect of using the optical fiber sensing system 100 will be described. More specifically, an advantageous effect when compared with the optical fiber sensing system 100' will be described.

In the optical fiber sensing system 100', an operation of laying the optical fiber cable 1' and an operation of installing the sensing device 11' are required in order to achieve optical fiber sensing. That is, an operation of bringing the sensing device 11' to a spot where one end of the optical fiber cable 1' is arranged and connecting the one end of the optical fiber cable 1' to the sensing device 11'. In addition thereto, an operation of installing the analysis device 12' is required in order to achieve an analysis (including primary analysis processing and secondary analysis processing) of sensing data. That is, an operation of preparing an edge computer for primary analysis processing and for communication with the analysis system 3' is required.

In contrast, in the optical fiber sensing system 100, a function of executing optical fiber sensing, a function of executing primary analysis processing, and a function of transmitting primary analysis data are achieved by the portable device 2. Thus, an operation of preparing an edge computer equivalent to the analysis device 12' is unnecessary, upon achieving an analysis (including primary analysis processing and secondary analysis processing) of sensing data. This can easily achieve an analysis of sensing data, compared with the optical fiber sensing system 100'.

Next, another effect of using the optical fiber sensing system 100 will be described. More specifically, an advantageous effect when compared with the technique described in PTL 1 will be described.

As described above, the optical fiber distributed temperature measurement device described in PTL 1 includes an electrical signal control processing block, but does not include a block for communicating with an external system. Thus, there has been a problem of difficulty in achieving an analysis in cooperation with an external system, upon analyzing data acquired by optical fiber sensing. Specifically, for example, there has been a problem of difficulty in analyzing using a dedicated AI engine in an external system.

In contrast, in the optical fiber sensing system 100, the portable device 2 includes the communication unit 13 transmitting primary analysis data to the analysis system 3. Thereby, an analysis (including primary analysis processing and secondary analysis processing) in cooperation with the analysis system 3 can be easily achieved. That is, an analysis in cooperation with an external system can be easily achieved, compared with when the optical fiber temperature distribution measurement device described in PTL 1 is used. Specifically, for example, an analysis using the dedicated AI engine 21 in an external system (the analysis system 3) can be easily achieved.

Next, a modified example of the portable device 2 will be described.

In the portable device 2, each of the sensing unit 11 and the analysis unit 12 may be unitized, and individual units may be configured detachably to the housing 15. Further, there may be provided a structure in which, when individual units are accommodated in the housing 15, the accommodated units are electrically connected to the power supply circuit 14.

Thereby, in the portable device 2, a selected sensing unit 11 among a plurality of types of sensing units 11 prepared in advance may be mounted. The plurality of types of sensing units 11 may execute, for example, sensing (for example, DVS, DAS, or DTS) different from each other.

Further, in the portable device 2, a selected analysis unit 12 among a plurality of types of analysis units 12 prepared in advance may be mounted. The plurality of types of analysis units 12 may execute, for example, primary analysis processing of different contents from each other.

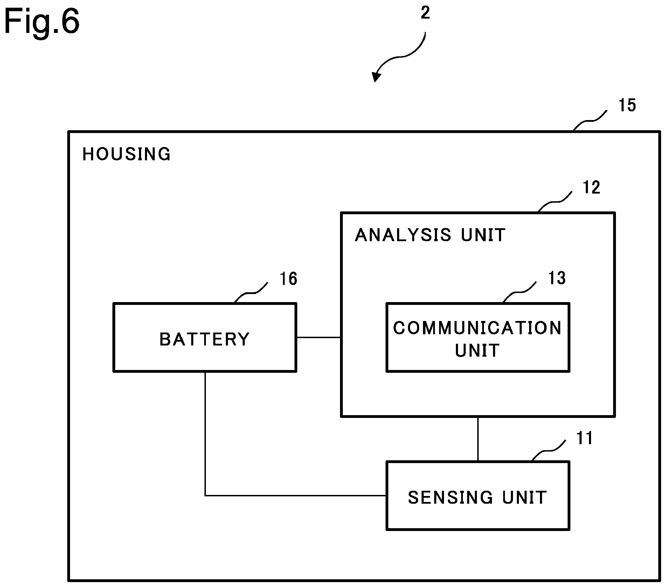

Next, another modified example of the portable device 2 will be described with reference to Fig. 6.

As illustrated in Fig. 6, the portable device 2 may include a battery 16 instead of the power supply circuit 14. The battery 16 supplies electrical power for operation to each of the sensing unit 11 and the analysis unit 12 (including the communication unit 13). The battery 16 is accommodated in the housing 15. Use of the battery 16 can reduce the number of AC power supply cables to be connected to the portable device 2 to zero. This can further facilitate handling of the portable device 2.

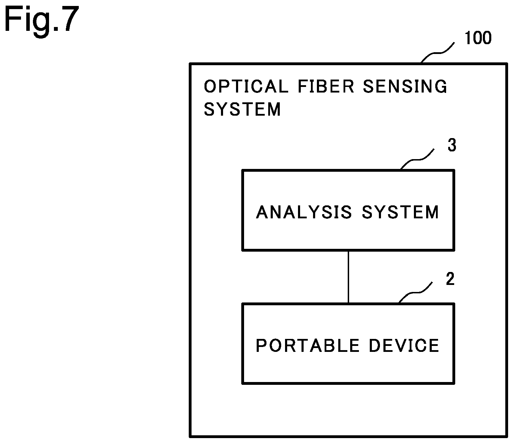

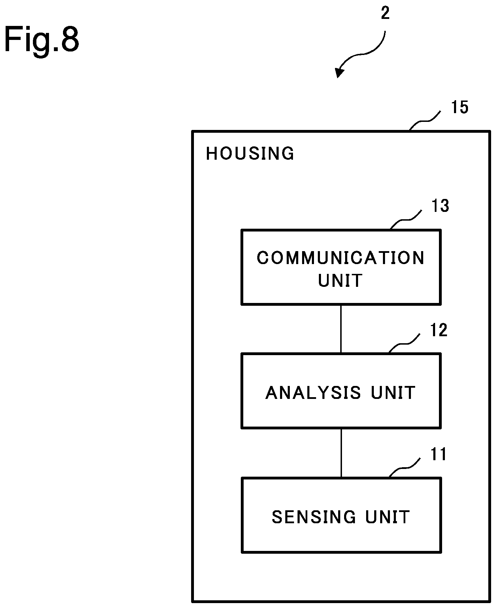

Next, a modified example of the optical fiber sensing system 100 will be described with reference to Fig. 7. Further, another modified example of the portable device 2 will be described with reference to Fig. 8.

As illustrated in Fig. 7, the optical fiber sensing system 100 may include the portable device 2 and the analysis system 3. In other words, a main portion of the optical fiber sensing system 100 may be configured by the portable device 2 and the analysis system 3. In this case, the output system 4 and the control system 5 may be provided outside the optical fiber sensing system 100. Herein, as illustrated in Fig. 8, the portable device 2 may include the sensing unit 11, the analysis unit 12, the communication unit 13, and the housing 15. In other words, a main portion of the portable device 2 may be configured by the sensing unit 11, the analysis unit 12, the communication unit 13, and the housing 15. In this case, the power supply circuit 14 or the battery 16 may be provided outside the portable device 2.

Even in this case, an effect as described above can be exhibited. That is, the sensing unit 11 of the portable device 2 executes optical fiber sensing using the optical fiber cable 1 (not illustrated in Figs. 7 and 8). The analysis unit 12 of the portable device 2 executes primary analysis processing on sensing data acquired by the optical fiber sensing. The communication unit 13 of the portable device 2 transmits, to the analysis system 3 executing secondary analysis processing based on a result of the primary analysis processing outside the portable device 2, data (primary analysis data) including a result of the primary analysis processing. By the portable device 2 transmitting the primary analysis data to the analysis system 3, an analysis in cooperation with the analysis system 3 can be easily achieved. That is, an analysis in cooperation with an external system can be easily achieved. Further, an operation of preparing an edge computer equivalent to the analysis device 12' can be eliminated.

### [Second Example Embodiment]

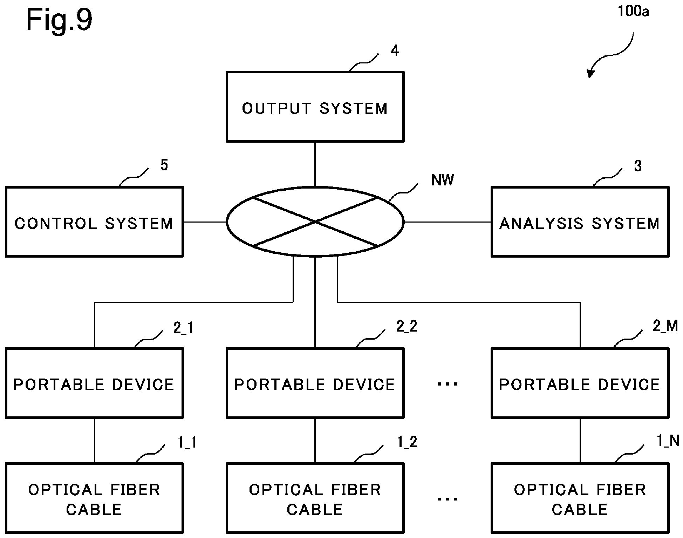

Fig. 9 is a block diagram illustrating a main portion of an optical fiber sensing system according to a second example embodiment. The optical fiber sensing system according to the second example embodiment will be described with reference to Fig. 9. Note that, in Fig. 9, a block similar to a block illustrated in Fig. 1 is assigned with an identical reference sign, and description therefor will be omitted.

As illustrated in Fig. 9, an optical fiber sensing system 100a includes N optical fiber cables 1_1 to 1_N and M portable devices 2_1 to 2_M. Herein, each of N and M is an integer equal to or more than 2. In an example illustrated in Fig. 9, N=M holds, and the portable devices 2_1 to 2_M are associated one by one with the optical fiber cables 1_1 to 1_N. Each of the portable devices 2_1 to 2_M can freely communicate with an analysis system 3 via a network NW. Further, a control system 5 can freely communicate with each of the portable devices 2_1 to 2_M, the analysis system 3, and an output system 4 via the network NW.

The individual optical fiber cable 1 in the optical fiber sensing system 100a is similar to the optical fiber cable 1 in the optical fiber sensing system 100 according to the first example embodiment. Further, the individual portable device 2 in the optical fiber sensing system 100a is similar to the portable device 2 in the optical fiber sensing system 100 according to the first example embodiment.

That is, a sensing unit 11 (not illustrated in Fig. 9) of the individual portable device 2 acquires sensing data by executing optical fiber sensing (more specifically, DFOS) using the associated optical fiber cable 1. An analysis unit 12 (not illustrated in Fig. 9) of the individual portable device 2 executes primary analysis processing on the acquired sensing data. A communication unit 13 (not illustrated in Fig. 9) of the individual portable device 2 transmits primary analysis data to the analysis system 3.

The analysis system 3 receives primary analysis data transmitted from the individual portable device 2. Thereby, primary analysis data indicating a result of primary analysis processing in the M portable devices 2_1 to 2_M are received. The analysis system 3 executes secondary analysis processing on the received primary analysis data. That is, the secondary analysis processing is processing based on a result of the primary analysis processing in the M portable devices 2_1 to 2_M. In other words, the primary analysis processing in the individual portable device 2 is processing equivalent to preprocessing on the secondary analysis processing in the analysis system 3. The secondary analysis processing may use a dedicated AI engine 21 (not illustrated in Fig. 9), as described in the first example embodiment.

The control system 5 controls an operation of each of the sensing unit 11 and the analysis unit 12 in the individual portable device 2, by communicating with the communication unit 13 of the individual portable device 2.

In this way, a main portion of the optical fiber sensing system 100a is configured.

Next, an effect of using the optical fiber sensing system 100a will be described. More specifically, an advantageous effect when compared with the technique described in PTL 1 will be described.

As described above, the optical fiber distributed temperature measurement device described in PTL 1 includes an electrical signal control processing block, but does not include a block for communicating with an external system. Thus, there has been a problem of difficulty in achieving an analysis in cooperation with an external system, upon analyzing data acquired by optical fiber sensing. Specifically, for example, there has been a problem of difficulty in analyzing using a dedicated AI engine in an external system, or in complexly analyzing data acquired by a plurality of optical fiber distributed temperature measurement devices.

In contrast, in the optical fiber sensing system 100a, the individual portable device 2 includes the communication unit 13 transmitting primary analysis data to the analysis system 3. Thereby, an analysis (including primary analysis processing and secondary analysis processing) in cooperation with the analysis system 3 can be easily achieved. That is, an analysis in cooperation with an external system can be easily achieved, compared with when the optical fiber temperature distribution measurement device described in PTL 1 is used. Specifically, for example, an analysis using the dedicated AI engine 21 in an external system (the analysis system 3) can be easily achieved. Further, for example, a complex analysis of primary analysis data acquired by the M portable devices 2_1 to 2_M can be facilitated.

Next, a modified example of the individual portable device 2 will be described.

The individual portable device 2 can employ various modified examples similar to those described in the first example embodiment. For example, the individual portable device 2 may include a battery 16 instead of a power supply circuit 14, as illustrated in Fig. 6. Further, for example, a main portion of the individual portable device 2 may be configured by the sensing unit 11, the analysis unit 12, the communication unit 13, and a housing 15, as illustrated in Fig. 8.

Next, a modified example of the optical fiber sensing system 100a will be described.

The number M of the portable devices 2_1 to 2_M may be different from the number N of the optical fiber cables 1_1 to 1_N (N≠M). In this case, the individual portable device 2 may execute optical fiber sensing using equal to or more than two optical fiber cables 1.

Besides the above, the optical fiber sensing system 100a can employ various modified examples similar to those described in the first example embodiment. For example, a main portion of the optical fiber sensing system 100a may be configured by the portable devices 2_1 to 2_M and the analysis system 3, similarly to an example described with reference to Fig. 7.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

The whole or part of the example embodiments described above can be described as, but not limited to, the following supplementary notes.

### [Supplementary notes]

### [Supplementary note 1]

A portable device including:
a sensing means for executing optical fiber sensing using an optical fiber cable;
an analysis means for executing primary analysis processing on sensing data acquired by the optical fiber sensing;
a communication means for transmitting, to an external analysis means for executing secondary analysis processing based on a result of the primary analysis processing outside the portable device, data including a result of the primary analysis processing; and
a housing accommodating the sensing means, the analysis means, and the communication means.

### [Supplementary note 2]

The portable device according to supplementary note 1, wherein
the communication means is provided in the analysis means,
the portable device further includes a power supply circuit supplying electrical power for operation to the sensing means and the analysis means, by using electrical power supplied from an external power supply via a power supply cable, and
the housing accommodates the power supply circuit.

### [Supplementary note 3]

The portable device according to supplementary note 1, wherein
the communication means is provided in the analysis means,
the portable device further includes a battery supplying electrical power for operation to the sensing means and the analysis means, and
the housing accommodates the battery.

### [Supplementary note 4]

The portable device according to any one of supplementary notes 1 to 3, wherein
the communication means communicates with the external analysis means and communicates with an external control means for controlling an operation of the sensing means and the analysis means outside the portable device, and
the external control means controls an operation of the sensing means and the analysis means, by communicating with the communication means.

### [Supplementary note 5]

The portable device according to any one of supplementary notes 1 to 4, wherein the primary analysis processing includes at least one of processing of determining a position coordinate associated with the sensing data and processing of detecting occurrence of an abnormality around the optical fiber cable.

### [Supplementary note 6]

The portable device according to any one of supplementary notes 1 to 5, wherein
the external analysis means includes an AI engine for use in the secondary analysis processing, and
the external analysis means executes the secondary analysis processing by using the AI engine.

### [Supplementary note 7]

The portable device according to any one of supplementary notes 1 to 6, wherein the analysis means uses an on-vehicle computer or a rack mount server.

### [Supplementary note 8]

The portable device according to any one of supplementary notes 1 to 7, wherein the communication means uses at least one of a cellular module and a LAN module.

### [Supplementary note 9]

An optical fiber sensing system including:
the portable device according to any one of supplementary notes 1 to 8; and
the external analysis means.

### [Supplementary note 10]

An analysis method including, by a portable device:
executing optical fiber sensing using an optical fiber cable;
executing primary analysis processing on sensing data acquired by the optical fiber sensing; and
transmitting, to an external analysis means for executing secondary analysis processing based on a result of the primary analysis processing outside the portable device, data including a result of the primary analysis processing.

### Reference Signs List

- 1: Optical fiber cable
- 2: Portable device
- 3: Analysis system (external analysis means)
- 4: Output system
- 5: Control system (external control means)
- 11: Sensing unit (sensing means)
- 12: Analysis unit (analysis means)
- 13: Communication unit (communication means)
- 14: Power supply circuit
- 15: Housing
- 16: Battery
- 21: AI engine
- 100, 100a: Optical fiber sensing system

## Claims

1. A portable device comprising:
sensing means for executing optical fiber sensing using an optical fiber cable;
analysis means for executing primary analysis processing on sensing data acquired by the optical fiber sensing;
communication means for transmitting, to external analysis means for executing secondary analysis processing based on a result of the primary analysis processing outside the portable device, data including a result of the primary analysis processing; and
a housing accommodating the sensing means, the analysis means, and the communication means.

2. The portable device according to claim 1, wherein
the communication means is provided in the analysis means,
the portable device further comprises a power supply circuit supplying electrical power for operation to the sensing means and the analysis means, by using electrical power supplied from an external power supply via a power supply cable, and
the housing accommodates the power supply circuit.

3. The portable device according to claim 1, wherein
the communication means is provided in the analysis means,
the portable device further comprises a battery supplying electrical power for operation to the sensing means and the analysis means, and
the housing accommodates the battery.

4. The portable device according to any one of claims 1 to 3, wherein
the communication means communicates with the external analysis means and communicates with external control means for controlling an operation of the sensing means and the analysis means outside the portable device, and
the external control means controls an operation of the sensing means and the analysis means, by communicating with the communication means.

5. The portable device according to any one of claims 1 to 4, wherein the primary analysis processing includes at least one of processing of determining a position coordinate associated with the sensing data and processing of detecting occurrence of an abnormality around the optical fiber cable.

6. The portable device according to any one of claims 1 to 5, wherein
the external analysis means includes an AI engine for use in the secondary analysis processing, and
the external analysis means executes the secondary analysis processing by using the AI engine.

7. The portable device according to any one of claims 1 to 6, wherein the analysis means uses an on-vehicle computer or a rack mount server.

8. The portable device according to any one of claims 1 to 7, wherein the communication means uses at least one of a cellular module and a LAN module.

9. An optical fiber sensing system comprising:
the portable device according to any one of claims 1 to 8; and
the external analysis means.

10. An analysis method comprising, by a portable device:
executing optical fiber sensing using an optical fiber cable;
executing primary analysis processing on sensing data acquired by the optical fiber sensing; and
transmitting, to external analysis means for executing secondary analysis processing based on a result of the primary analysis processing outside the portable device, data including a result of the primary analysis processing.
